# EUROPÄISCHE PATENTANMELDUNG

(11) **EP 2 180 122 A1**
(43) Veröffentlichungstag der Anmeldung: **28.04.2010**
(21) Anmeldenummer: 09013407.3
(22) Anmeldetag: 23.10.2009
(51) Int. Cl.: E05D 7/086, E05D 11/08, E05F 3/20, B60R 7/06

(54) **Bremsvorrichtung, insbesondere für den Einsatz im Automobilbereich**

(30) Priorität: 24.10.2008 DE 102008053046
(71) Anmelder: Weber GmbH & Co. KG Kunststofftechnik und Formenbau, 35683 Dillenburg (DE)
(72) Erfinder: Franz, Peter, 35708 Haiger (DE); Tüttö, Stefan, 35713 Eschenburg (DE)
(74) Vertreter: Müller, Eckhard

(57) **Zusammenfassung**

Die Erfindung betrifft eine Bremsvorrichtung (2), insbesondere zum Einsatz im Automobilbereich, zur Bremsung der Relativbewegung zweier an die Bremsvorrichtung (2) angeschlossener Bauteile, mit einem Stator (4) und einem in dem Stator (4) eingesetzten Rotor (6), der um eine Rotationsachse (Z) drehbar ist. Der Stator (4) weist zwei Formflächen (10, 12) auf, die sich in Richtung der Rotationsachse (Z) aneinander anschließen und deren Seitenwände jeweils zur Rotationsachse (Z) einen Winkel (ϕ₁, ϕ₂) einschließen, wobei die Formflächen (10. 12) des Stators (4) und Bereiche (20, 22) des Rotors (6) im Wesentlichen komplementäre Oberflächen aufweisen. Es ist vorgesehen, dass zwischen den Formflächen (10, 12) des Stators (4) und zwischen den Bereichen (20, 22) des Rotors (6) jeweils Übergangsbereiche (14, 24) gebildet sind, in denen Stator (4) und Rotor (6) berührungsfrei sind.

## Beschreibung

Die Erfindung betrifft eine Bremsvorrichtung zur Bremsung der Relativbewegung zweier an die Bremsvorrichtung angeschlossener Bauteile mit einem Stator und einem in dem Stator eingesetzten Rotor, welcher um eine Rotationsachse drehbar ist, wobei der Stator zwei Formflächen aufweist, die sich in Richtung der Rotationsachse aneinander anschließen und deren Seitenwände jeweils zur Rotationsachse einen spitzen Winkel einschließen, wobei die Formflächen des Stators und Bereiche des Rotors im Wesentlichen komplementäre Oberflächen aufweisen. Die Erfindung betrifft ferner ein Fahrzeug mit einer solchen Bremsvorrichtung.

### Stand der Technik

Eine derartige Bremsvorrichtung ist für den Einsatz im Automobilbereich, insbesondere zur Bremsung einer Öffnungs- oder Schließbewegung eines federkraft- oder schwerkraftbedingt öffnenden oder schließenden Bauteils, geeignet.

Eine gattungsgemäße Bremsvorrichtung ist aus der JP 05086766 A bekannt, welche an einem Scharnier gebildet ist. Das Scharnier weist ein feststehendes Teil und ein drehbares Teil auf, wobei das drehbare Teil von dem feststehenden Teil umgeben und gegenüber dem feststehenden Teil verdrehbar ist. Zumindest das feststehende Teil besteht aus Kunstharz. Die Herstellung des Scharniers erfolgt in der Weise, dass zuerst das drehbare Teil fertig gestellt wird und anschließend das drehbare Teil in eine das feststehende Teil erzeugende Spritzform eingelegt wird. In die Spritzform wird anschließend Kunstharz eingefüllt und ausgehärtet. Nach dem Herauslösen aus der Spritzform liegt das fertige Scharnier vor, in dessen feststehendem Teil das drehbare Teil bereits eingelassen ist.

Das feststehende Teil weist wenigstens zwei Formflächen auf, die sich in Richtung der Rotationsachse des drehbaren Teiles aneinander anschließen und deren Seitenwände jeweils zur Rotationsachse einen spitzen Winkel einschließen. Den Formflächen des feststehenden Teiles sind Formflächen des drehbaren Teiles komplementär. Die einander komplementären Formflächen wirken reibschlüssig gegeneinander. Der Reibschluss ist durch Schrumpfung des das feststehende Teil bildenden Materiales bei seinem Aushärten nach dem Vergießen in die Spritzform erzeugt.

Bei dem bekannten Scharnier kommt es jedoch in den Bereichen, wo sich die schräg einander zulaufenden Seitenwände treffen, auf Dauer zu unerwünschtem Abrieb. Es hat sich gezeigt, dass ein solcher Abrieb verstärkt auftritt, wenn beim Betätigen des bekannten Scharniers auch Kräfte quer zur Rotationsachse des drehbaren Teiles wirken. Bei einem Einsatz einer solchen Bremsvorrichtung in der Praxis, wie beispielsweise im Kraftfahrzeugbereich bei einem Scharnier eines Handschuhfachdeckels zum Abbremsen der Rotationsbewegung des Scharniers, ist daher aufgrund des erheblichen Abriebes mit einem frühzeitigen Ausfall des Scharniers zu rechnen.

Ein Verfahren zur Herstellung eines Kugelgelenkes, welches sich Schrumpfungsvorgänge zu Nutze macht, ist aus der DE 26 01 345 bekannt.

### Aufgabenstellung

Der Erfindung liegt die Aufgabe zugrunde, eine Bremsvorrichtung mit den eingangs genannten Merkmalen dahingehend weiterzuentwickeln, dass dauerhaft geringerer-Verschleiß als bisher durch die Bremsvorrichtung verursacht wird. Durch die erfindungsgemäße Bremsvorrichtung soll insbesondere weniger Abrieb als bisher bei quer zur Rotationsachse wirkenden Kräften entstehen.

### Erfindung und vorteilhafte Wirkungen

Die Erfindung wird gelöst durch eine Bremsvorrichtung gemäß Anspruch 1. Vorteilhafte Ausgestaltungen der Erfindung sind Gegenstand der Unteransprüche.

Eine erfindungsgemäße Bremsvorrichtung, wie sie insbesondere im Automobilbereich zur Bremsung der Relativbewegung zweier an die Bremsvorrichtung angeschlossener Bauteile vorgesehen ist, weist einen Stator und einen in dem Stator gelagerten Rotor auf, welcher um eine Rotationsachse drehbar ist. Der Stator ist dabei an einem der beiden Bauteile festgelegt, wohingegen der Rotor an dem anderen Bauteil festgelegt ist. Der Stator braucht selbst nicht fahrzeugfest verbaut zu sein, wenn beispielsweise das betreffende Bauteil ebenfalls beweglich im Fahrzeug befestigt ist.

Statt einer unmittelbaren Verbindung zweier derartiger Bauteile, kann auch ein Einsatz der Bremsvorrichtung in einem Zwischenglied vorgesehen sein. Entsprechende Bauteile können zum Beispiel Handschuhfachdeckel, Ascherdeckel, Türfachklappen, Mittelfachklappen oder dergleichen sein.

Bei der erfindungsgemäßen Bremsvorrichtung weist der Stator zwei Formflächen auf, die sich in Richtung der Rotationsachse aneinander anschließen und deren Seitenwände jeweils zur Rotationsachse einen spitzen Winkel einschließen. Mit Hilfe dieser zweier Formflächen wird mit dem Rotor eine Reibpaarung erzeugt, die auf der Basis der Gleitreibung zwischen zwei Reibpartnern eine Bremskraft erzeugt.

Durch die Ausbildung zweier Formflächen, die jeweils einen spitzen Winkel zur Rotationsachse einschließen, wird darüber hinaus eine einfache und gleichzeitig zuverlässige Festlegung des Rotors in axialer Richtung bewirkt. Der spitze Winkel wird dabei als der kleinste Winkel zwischen Seitenwänden und Rotationsachse bestimmt.

Die Formflächen des Stators und Bereiche des Rotors weisen im Wesentlichen komplementäre Oberflächen auf, sodass diese im Bereich der Formflächen bzw. Oberflächen weitgehend vollflächig aneinander anliegen. Da die Gleitreibung unter anderem von der Größe der kontaktierenden Oberfläche der Reibpartner abhängt, lassen sich mit im Wesentlichen komplementären Oberflächen die Reibwerte besonders einfach einstellen.

Erfindungsgemäß sind zwischen den Formflächen des Stators und zwischen den Bereichen des Rotors jeweils Übergangsbereich gebildet, in denen Stator und Rotor berührungsfrei sind.

Mit Hilfe dieses freien Übergangsbereiches wird erreicht, dass Rotor und Stator nur flächig im Bereich der Kavität beziehungsweise den die Bremsung erzeugenden Reibbereichen aneinander liegen und nicht auch im Übergangsbereich, in dem bei Querkräften mit erhöhtem Abrieb zu rechnen wäre. Darüber hinaus wird dadurch ein Toleranzausgleich geschaffen.

Nach einer Weiterbildung der Erfindung ist vorgesehen, dass die Bereiche des Rotors durch zwei Bereiche gebildet sind, die sich in Richtung der Rotationsachse aneinander anschließen und die jeweils zur Rotationsachse einen spitzen Winkel einschließen. Bevorzugt entspricht der jeweilige spitze Winkel im Wesentlichen dem spitzen Winkel, die die Formflächen mit der Rotationsachse einschließen. Dadurch wird eine gut definierte Reibpaarung erzeugt, sodass sich die Eigenschaften der Bremsvorrichtung besonders gut einstellen lassen.

Eine Weiterbildung der Erfindung sieht vor, dass die Formflächen des Stators und/oder die Bereiche des Rotors kegel- oder kegelstumpfartig ausgebildet sind. Derartige Bauteile lassen sich besonders einfach herstellen.

Eine bevorzugte Herstellungsmethode für die Bremsvorrichtung ist das sogenannte Zweikomponenten-Spritzgussverfahren. Dabei wird zuerst eines der Bauteile mit einer ersten Komponente hergestellt und das andere Bauteil dann in das erste Bauteil eingespritzt. So kann zum Beispiel vorgesehen sein, zunächst den Stator in einer Spritzgussform zu spritzen, bei der die Formflächen durch zwei entsprechend geformte Kokillenhälften geformt werden und im Anschluss daran der ausgeformte und ggf. nachbearbeitete Stator in eine weitere Gießform eingesetzt wird, in welcher dann der Rotor eingegossen wird.

Die Materialpaarung wird bevorzugt so gewählt, dass das Material des Rotors sich nicht stoffschlüssig mit dem Material des Stators verbindet. Die erfindungsgemäße Ausgestaltung mit zwei Formflächen im Stator nutzt aus, dass nach Herstellung des Stators, des sogenannten Vorspritzlings, und nach Einspritzen der zweiten Komponente zur Herstellung des Rotors beim Abkühlen eine Schrumpfung bzw. Schwindung entsteht, die bei dem Vorspritzling im Wesentlichen senkrecht zu einer Entformungsrichtung der Spritzgießkokillen stattfindet, während die zweite Komponente im Wesentlichen in einer Richtung senkrecht hierzu schwindet. Dies führt dazu, dass die Bereiche des Rotors an die Seitenwände der Formflächen angepresst werden, was eine bestimmte Anpresskraft erzeugt, die für die Reibungskraft und damit für den Bremswiderstand verantwortlich ist.

Die Ent- oder Ausformungsrichtung fällt bevorzugt mit der Rotationsachse des Rotors zusammen.

Durch die Schwindung senkrecht zur Entformungsrichtung werden auf besonders einfache Weise in den Übergangsbereichen der beiden Formflächen des Stators die berührungsfreien Flächen zwischen Stator und Rotor erzeugt. Hierzu kann die zuvor beschriebene Schrumpfung ausgenutzt werden, die im Übergangsbereich zu einer Schrumpfung des Stators senkrecht zur Ausformungsrichtung führt.

Bevorzugt bilden die beiden Formflächen einen Doppelkegelstumpf, also zwei entgegengesetzt ausgerichtete Kegel, welche an ihren Stümpfen aneinanderliegen. Dadurch wird eine rotationssymmetrisch angeordnete Durchgangsöffnung im Stator erzeugt, welche der Rotor durchdringt.

Der Bremswiderstand, der im Wesentlichen durch Gleitreibung erzeugt wird, lässt sich mit Hilfe der Geometrie der Formflächen sowie des Rotors einstellen. Je größer der Winkel der Schrägfläche ist, desto größer ist die Reibfläche zwischen Stator und Rotor und desto größer ist die Reibkraft. Je kleiner der Durchmesser des Stators in radialer Richtung und je größer der Winkel der Schrägflächen gegenüber der Rotationsrichtung, desto größer ist die Reibung.

Gemäß einer Weiterbildung kommen als Reibpaarungen Polyamid (PA) einerseits und POM oder PBT andererseits in Betracht. Besonders bevorzugt wird der Vorspritzling, also regelmäßig der Stator, aus Polyamid hergestellt und der Rotor aus POM. Die Verwendung von POM als zweite Komponente ist vorteilhaft, da dieses sehr gute Schallübertragungseigenschaften hat und dadurch eine Geräuschminderung beim Öffnen erreicht wird. Zudem ist POM sehr abriebfest, sodass der Verschleiß einer entsprechenden Vorrichtung sehr gering ist. Unter POM ist im Sinne der Erfindung der thermoplastische Kunststoff Polyoxymethylen zu verstehen. Weiterhin ist im Zuge der Erfindung unter PBT ein Polybutylenterephthalat zu verstehen.

Bevorzugt ist an dem Rotor eine Welle und/oder ein Ritzel angeformt.

Die Erfindung betrifft ferner ein Fahrzeug mit wenigstens einer erfindungsgemäßen Bremsvorrichtung. Bevorzugt ist die Bremsvorrichtung zur Bremsung der Relativbewegung zweier Bauteile vorgesehen, von denen eines der Bauteile ein Handschuhfachdeckel, ein Ascherdeckel, eine Türfachklappe oder eine Mittelfachklappe ist.

### Ausführungsbeispiel

Weitere Ziele, Merkmale sowie vorteilhafte Anwendungsmöglichkeiten der Erfindung ergeben sich aus der nachfolgenden Beschreibung eines Ausführungsbeispiels anhand der Zeichnungen. Dabei bilden sämtliche beschriebenen und/oder bildlich dargestellten Merkmale in ihrer sinnvollen Kombination den Gegenstand der vorliegenden Erfindung, auch unabhängig von den Patentansprüchen und deren Rückbezügen.

Die Erfindung wird anhand des nachfolgenden Ausführungsbeispiels erläutert. Es zeigen dabei schematisch:
- Fig. 1a: eine perspektivische Ansicht einer erfindungsgemäßen Bremse;
- Fig. 1b: einen Querschnitt durch eine erfindungsgemäße Bremse;
- Fig. 2a: eine perspektivische Ansicht eines Stators der Bremse;
- Fig. 2b: einen Querschnitt durch den Stator aus Fig. 2a;
- Fig. 3a: ein erfindungsgemäßer Rotor in perspektivischer Ansicht;
- Fig. 3b: einen Querschnitt durch den Rotor aus Fig. 3a;
- Fig. 4: ein Querschnitt durch eine erfindungsgemäße Bremse in vergrößerter Ansicht sowie

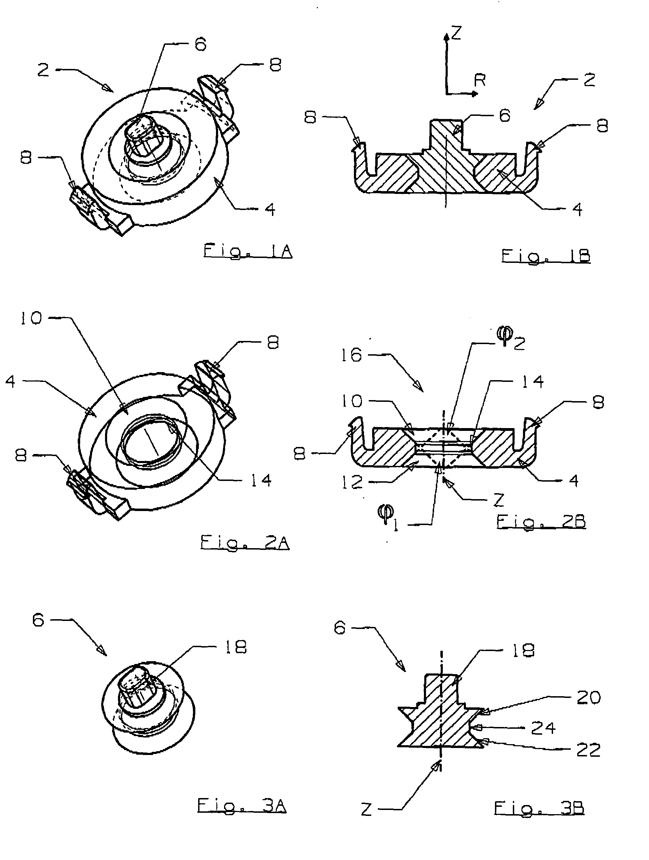

Fig. 1a zeigt eine erfindungsgemäße Bremse 2 in schematischer perspektivischer Ansicht. Die Bremse weist einen Stator 4 auf sowie einen in dem Stator 4 gelagerten Rotor 6. Der Rotor 6 kann relativ zum Stator 4 gedreht werden.

Der Stator 4 wird an einem ersten Bauteil eines Kraftfahrzeuges festgelegt, beispielsweise an einer Aufhängung einer Handschuhfachklappe. Der Rotor 6 andererseits kann in einem zu dem ersten Bauteil relativ beweglichen zweiten Bauteil festgelegt werden, beispielsweise besagte Handschuhfachklappe. Zur Festlegung des Stators 4 sind Rastvorsprünge 8 vorgesehen, mit welchen der Stator 4 in dem ersten Bauteil verrastet werden kann.

Der innere Aufbau der erfindungsgemäßen Bremse 2 ergibt sich aus dem in Fig. 1b dargestellten Querschnitt.

Der Stator 4 weist, wie in Fig. 2b dargestellt, zwei Formflächen 10, 12 auf, welche jeweils kegelstumpfartig ausgebildet sind und welche zwischen sich einen abgerundeten Übergangsbereich 14 ausbilden. Die Kegelstümpfe sind durch punktierte Linien angedeutet. Insgesamt ergibt sich somit eine im Wesentlichen rotationssymmetrische konvexe Durchgangsausnehmung 16.

Die Formflächen 10, 12 und 16 werden durch entsprechend geformte Kokillen erzeugt, wohingegen der abgerundete Übergangsbereich 14 im Wesentlichen durch eine Materialschrumpfung beim Abkühlen des Spritzmaterials nach dem Entformen entsteht.

Die Formflächen 10, 12 schließen mit einer Rotationsachse z jeweils Winkel ϕ₁, ϕ₂ mit der Rotationsachse z ein, die größer als 0° und kleiner als 90° sind, vorliegend etwa 30°.

Der Rotor 6 ist gemäß den Figuren 3a, 3b im Wesentlichen komplementär aufgebaut. Der Rotor 6 weist einen Anschlussbereich 18 zum Anschluss eines Ritzels oder eines zu bewegenden Bauteils auf. In einem in den Formflächen 10, 12 des Stators 4 ruhenden Bereich des Rotors 6 ist dieser mit im Wesentlichen zu den Formflächen 10, 12 komplementären Flächen 20, 22 ausgebildet, die einem Übergangsbereich 24 ineinander übergehen. Die Flächen 20, 22 bilden ihrerseits also ebenfalls aufeinanderliegende Kegelstümpfe, die im Wesentlichen gleiche Winkel aufweisen, wie die Formflächen 10,12.

Die erfindungsgemäße Bremsvorrichtung 2 wird im Zweikomponenten-Spritzgussverfahren hergestellt. In einer entsprechenden Gießform wird dabei zunächst der Stator 4 beispielsweise aus PA gespritzt und anschließend entformt. Dann wird der sogenannte Vorspritzling in eine andere Form gesetzt und dann der Rotor 4 aus POM eingespritzt.

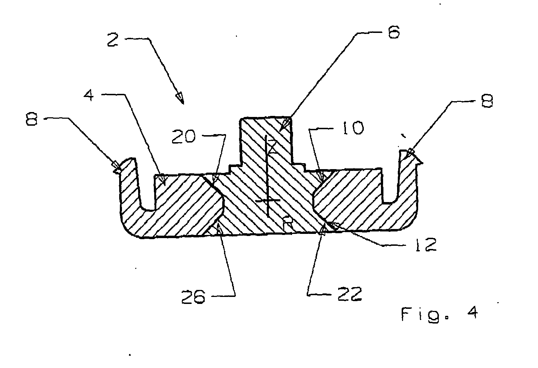

Beim Aushärten von Stator 4 und Rotor 6 sind die in Fig. 4 gezeigten Schrumpfungsvorgänge festzustellen. Der Stator 4 schrumpft im Wesentlichen in einer radialen Richtung R, die senkrecht zur Entformungsrichtung und gleichzeitig zur Rotationsrichtung Z ausgerichtet ist. Der Rotor 6 hingegen schrumpft im Wesentlichen in Rotationsrichtung Z. Dadurch wird einerseits ein Bereich 26 geschaffen, in welchem Stator 4 und Rotor 6 nicht aneinanderliegen und andererseits werden die Flächen 20, 22 des Rotors 6 an die Wände der Formflächen 10, 12 des Stators gepresst. Auf diese Weise ergibt sich ein verstärkter Reibschluss.

Der Übersichtlichkeit halber ist das zuvor gezeigte Ausführungsbeispiel nach den Figuren 1a bis 4 ohne ein Abtriebsritzel gezeigt, welches auf dem Rotor 6 angebracht sein kann.

### Bezugszeichenliste

- 2: Bremse
- 4: Stator
- 6: Rotor
- 8: Rastvorsprünge
- 10: Kavität
- 12: Kavität
- 14: Übergangsbereich
- 16: Durchgangsausnehmung
- 18: Anschlussbereich
- 20: Fläche
- 22: Fläche
- 24: Übergangsbereich
- 26: Freiflächen

- R: Radiale Richtung
- Z: Rotationsachse
- ϕ₁: Winkel R/Kavität 10
- ϕ₂: Winkel R/Kavität 12

## Patentansprüche

1. Bremsvorrichtung, insbesondere zum Einsatz im Automobilbereich, zur Bremsung der Relativbewegung zweier an die Bremsvorrichtung (2) angeschlossener Bauteile, mit einem Stator (4) und einem in dem Stator (4) eingesetzten Rotor (6), der um eine Rotationsachse (Z) drehbar ist, wobei der Stator (4) zwei Formflächen (10, 12) aufweist, die sich in Richtung der Rotationsachse (Z) aneinander anschließen und deren Seitenwände jeweils zur Rotationsachse (Z) einen spitzen Winkel (ϕ₁, ϕ₂) einschließen, wobei die Formflächen (10, 12) des Stators (4) und Bereiche (20, 22) des Rotors (4) im wesentlichen komplementäre Oberflächen aufweisen, **dadurch gekennzeichnet, dass** zwischen den Formflächen (10, 12) des Stators (4) und zwischen den Bereichen (20, 22) des Rotors (6) jeweils Übergangsbereiche (14, 24) gebildet sind, in denen Stator (4) und Rotor (6) berührungsfrei sind.

2. Bremsvorrichtung nach Anspruch 1, **dadurch gekennzeichnet, dass** die Bereiche des Rotors (6) durch zwei Bereiche (20, 22) gebildet sind, die sich in Richtung der Rotationsachse (Z) aneinander anschließen und die jeweils zur Rotationsachse (Z) einen spitzen Winkel (ϕ_{1,} ϕ₂) einschließen.

3. Bremsvorrichtung nach Anspruch 1 oder 2, **dadurch gekennzeichnet, dass** die Formflächen (10, 12) Reibflächen bilden, an denen Flächen (20, 22) des Rotors (6) reiben.

4. Bremsvorrichtung nach einem der vorangegangenen Ansprüche, **dadurch gekennzeichnet, dass** die Formflächen (10, 12) und/oder Bereiche (20, 22) jeweils kegel- oder kegelstumpfartig, bevorzugt insgesamt doppelkegel- oder doppelkegelstumpfartig, ausgebildet sind.

5. Bremsvorrichtung nach einem der vorangegangenen Ansprüche, **dadurch gekennzeichnet, dass** Stator (4) und Rotor (6) im Zweikomponentenspritzgussverfahren hergestellt sind.

6. Bremsvorrichtung nach einem der vorangegangenen Ansprüche, **dadurch gekennzeichnet, dass** durch die Bereiche (20, 22) des Rotors (6) eine Klemmung in dem Stator (4) erzeugt ist.

7. Bremsvorrichtung nach einem der vorangegangenen Ansprüche, **dadurch gekennzeichnet, dass** der Stator (4) aus PA und/oder der Rotor (6) aus PBT oder POM bestehen.

8. Bremsvorrichtung nach einem der vorangegangenen Ansprüche, **dadurch gekennzeichnet, dass** an den Rotor (6) eine Abtriebswelle (18) und/oder ein Ritzel angeformt ist oder einstückig mit dem Rotor (6) ausgebildet ist.

9. Fahrzeug mit einer Bremsvorrichtung nach einem der vorhergehenden Ansprüche, welche insbesondere zur Bremsung der Relativbewegung zweier Bauteile dient, von denen eines der Bauteile ein Handschuhfachdeckel, ein Ascherdeckel, eine Türfachklappe oder eine Mittelfachklappe ist.
